(19) Europäisches Patentamt
European Patent Office
Office européen des brevets

(11) **EP 2 905 923 A1**

(12) **EUROPEAN PATENT APPLICATION**

(43) Date of publication:
**12.08.2015 Bulletin 2015/33**

(51) Int Cl.:
**H04L 9/00** $^{(2006.01)}$

(21) Application number: **14305177.9**

(22) Date of filing: **11.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventor: **Rondao Alface, Patrice**
**2018 Antwerpen (BE)**

(74) Representative: **ALU Antw Patent Attorneys**
**Intellectual Property and Standards**
**Copernicuslaan 50**
**2018 Antwerp (BE)**

Remarks:
Amended claims in accordance with Rule 137(2) EPC.

(54) **Method For Encrypting Or Decrypting A 3D Object**

(57)     Embodiments relates to a method for encrypting a 3D object (O) defined at least by a set of first points ($p_i$) and a set first of faces (F), contained in a bounding box (B), the method being executed by an encryption device and comprising:
- determining (S4) a set of second points ($p_{si}$) by bijection of the set of first points ($p_i$), and a second set of faces ($F_s$),
- determining (S5) an encrypted 3D object ($O_s$) defined at least by the set of second points ($p_{si}$) and the second set of faces ($F_s$),

wherein the first points ($p_i$) are associated with respective first indexes (i), the second points ($p_{si}$) are associated with respective second indexes ($s_j$), and a face is specified by a list of indexes,

wherein the encrypted 3D object ($O_s$) is contained in said bounding box (B),
the method further comprising:
- partitioning the bounding box (B) into a set of first sub-boxes ($n_j$),
- determining a set of second sub-boxes ($n_{sj}$) by bijection of the set of first sub-boxes ($n_j$), in function of a secret key (k),

wherein the position of a second point ($p_{si}$) is determined in function the position of the corresponding first point ($p_i$), the position of the first sub-box ($n_j$) containing the corresponding first point, and the position of the second sub-box ($n_{sj}$) corresponding with said first sub-box ($n_j$).

FIG. 3

EP 2 905 923 A1

**Description**

FIELD OF THE INVENTION

The present invention relates to the field of 3D graphics. In particular, the present invention relates to a method and a device for encrypting a 3D object, and to a method and a device for decrypting a 3D object.

BACKGROUND

In 3D applications such as 3D worlds built for gaming, immersive or mixed reality, communication through avatars in virtual worlds and other types of socializing metaverses, producers of synthesized or scanned 3D content that have significant value look for ways to both protect these objects against unauthorized access or copy, but also to create an incentive for the users to pay in order to access such content in a legal and traceable manner. Since these objects are embedded in the 3D world or metaverse, one option could be to "show nothing" where the object should appear and keep the object in an encrypted format. However, if there is no sign that some valuable object is available in a given portion of the 3D world in case the user pays for it, it will be difficult for the user to find it and there will be no incentive for buying access to the enriched premium version of the metaverse. To this end, geometry-preserving cryptography has been proposed so far to solve this aspect of the problem: the 3D object is shuffled inside its bounding box (being contained in the same bounding box makes sure the scrambled object will not provoke intersections with other elements of the 3D world/metaverse) so that the 3D engine displays either a scrambled version of the object if the user did not pay for the premium access, or the deciphered object in case the user did pay for it.

Different geometry-preserving cryptography techniques for encrypting and decrypting a 3D object have been proposed. However, the known techniques do not provide a satisfactory solution to the following requirements:

- The ciphered object should not slow down the rendering speed of the 3D engine (too many faces flips or intersections can complicate the z-buffer management of the Graphic Processor Units), otherwise the application loses its interest.
- The decryption must have a low complexity so that it also does not slow down the 3D engine rendering the 3D world or socializing metaverse.
- The encryption should be secure enough so that a user cannot reconstruct the 3D model from a surface reconstruction attack.
- The 3D engine must be able to deal with the necessary secret keys and deciphering.

SUMMARY

It is thus an object of embodiments of the present invention to propose a method and a device for encrypting or decrypting a 3D object, which do not show the inherent shortcomings of the prior art.

Accordingly, embodiments relate to a method for encrypting a 3D object defined at least by a set of first points and a first set of faces, contained in a bounding box, the method being executed by an encryption device and comprising:

- determining a set of second points by bijection of the set of first points, and a second set of faces,
- determining an encrypted 3D object defined at least by the set of second points and the second set of faces,

wherein the first points are associated with respective first indexes, the second points are associated with respective second indexes, a face of the first set of faces is specified by a list of first indexes and a corresponding face of the second set of faces is specified by a list of corresponding second indexes,
wherein the encrypted 3D object is contained in said bounding box,
the method further comprising:

- partitioning the bounding box into a set of first sub-boxes,
- determining a set of second sub-boxes by bijection of the set of first sub-boxes, in function of a secret key,

wherein the position of a second point is determined in function the position of the corresponding first point, the position of the first sub-box containing the corresponding first point, and the position of the second sub-box corresponding with said first sub-box.

Correspondingly, embodiments relate to a device for encrypting a 3D object defined at least by a set of first points and a first set of faces, contained in a bounding box, comprising:

- means for determining a set of second points by bijection of the set of first points, and a second set of faces,

- means for determining an encrypted 3D object defined at least by the set of second points and the second set of faces,

wherein the first points are associated with respective first indexes, the second points are associated with respective second indexes, a face of the first set of faces is specified by a list of first indexes and a corresponding face of the second set of faces is specified by a list of corresponding second indexes,
wherein the encrypted 3D object is contained in said bounding box,
the device further comprising:

- means for partitioning the bounding box into a set of first sub-boxes,
- means for determining a set of second sub-boxes by bijection of the set of first sub-boxes, in function of a secret key,

wherein the position of a second point is determined in function the position of the corresponding first point, the position of the first sub-box containing the corresponding first point, and the position of the second sub-box corresponding with said first sub-box.

Embodiments also relate to a method for decrypting an encrypted 3D object defined at least by a set of second points and a second set of faces, contained in a bounding box, the method being executed by an decryption device and comprising:

- determining a set of third points by bijection of the set of second points, and a third set of faces,
- determining a decrypted 3D object defined at least by the set of third points and the third set of faces,

wherein the second points are associated with respective second indexes, the third points are associated with respective third indexes, a face of the second set of faces is specified by a list of second indexes and a corresponding face of the third set of faces is specified by a list of corresponding third indexes,
wherein the decrypted 3D object is contained in said bounding box,
the method further comprising:

- partitioning the bounding box into a set of second sub-boxes,
- determining a set of third sub-boxes by bijection of the set of second sub-boxes, in function of a secret key,

wherein the position of a third point is determined in function the position of the corresponding second point, the position of the second sub-box containing the corresponding second point, and the position of the third sub-box corresponding with said first sub-box.

Correspondingly, embodiments relate to a device for decrypting an encrypted 3D object defined at least by a set of second points and a second set of faces, contained in a bounding box, comprising:

- means for determining a set of third points by bijection of the set of second points, and a third set of faces,
- means for determining a decrypted 3D object defined at least by the set of third points and the third set of faces,

wherein the second points are associated with respective second indexes, the third points are associated with respective third indexes, a face of the second set of faces is specified by a list of second indexes and a corresponding face of the third set of faces is specified by a list of corresponding third indexes,
wherein the decrypted 3D object is contained in said bounding box,
the device further comprising:

- means for partitioning the bounding box into a set of second sub-boxes,
- means for determining a set of third sub-boxes by bijection of the set of second sub-boxes, in function of a secret key,

wherein the position of a third point is determined in function the position of the corresponding second point, the position of the second sub-box containing the corresponding second point, and the position of the third sub-box corresponding with said first sub-box.

Partitioning the bounding box into a set of first sub-boxes may comprise an octree decomposition of the bounding box.

The octree decomposition may be iterated until a predefined maximum decomposition level is reached or until the sub-boxes comprises at maximum one first point.

The position of a second point may be determined by one of the following displacement types:

- a translation of the corresponding first point according to the translation between a center of the first sub-box containing the corresponding first point and a center of the second sub-box corresponding with said first sub-box,
- a translation of the corresponding first point according to the translation between the center of the first sub-box containing the corresponding first point and the center of the second sub-box corresponding with said first sub-box, followed by a mirroring with respect to the center of said second sub-box,
- a rotation of the corresponding first point according to the rotation between the center of the first sub-box containing the corresponding first point and the center of the second sub-box corresponding with said first sub-box,
- a translation of the corresponding first point according to the translation between the center of the first sub-box containing the corresponding first point and the center of the second sub-box corresponding with the said first sub-box, followed by a mirroring of the points with respect to a medial plane of said second sub-box center.

The displacement type for determining a second point depends on the secret key.

Embodiments also relate to a computer program comprising instructions for performing one of the methods mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a flowchart of a method for encrypting a 3D object,
Figure 2 is a functional view of a device for encrypting a 3D object,
Figure 3 shows the decomposition of the bounding box of a 3D object into an octree, and the scrambling of the octree,
Figure 4 is a flowchart of a method for decrypting a 3D object,
Figure 5 is a functional view of a device for decrypting a 3D object, and
Figure 6 is a structural view of a device for encrypting and/or decrypting a 3D object.

DESCRIPTION OF EMBODIMENTS

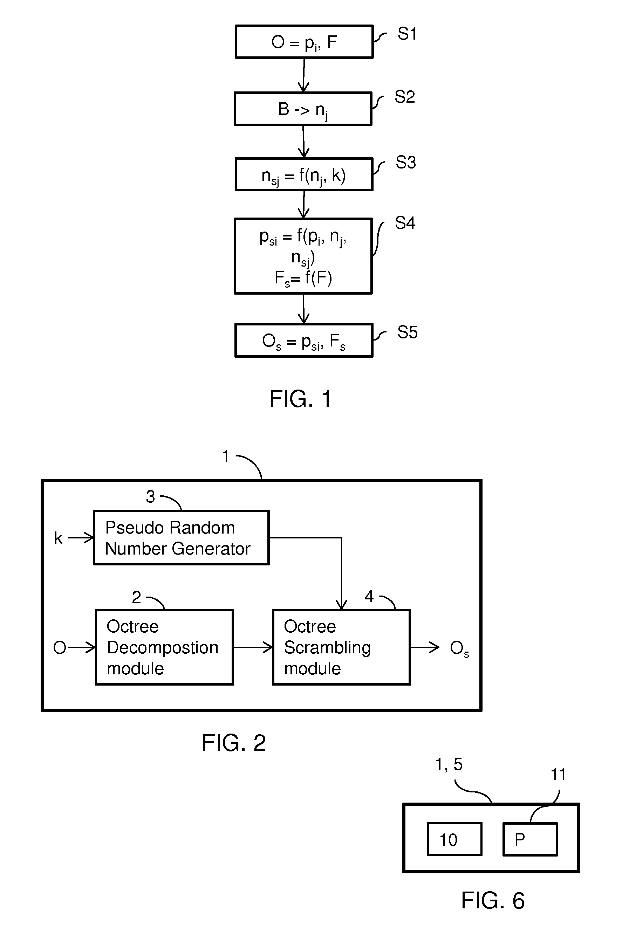

**Figure 1** is a flowchart of a method for encrypting a 3D object O into an encrypted 3D object $0_s$.

A 3D object O is defined at least by a set of points $p_i$ and a set of faces F (step S). A point $p_i$ has an index i ranging for example from 1 to M, where M is the number of points $p_i$, and is specified for example by its coordinates ($x_i$, $y_i$, $z_i$). A face is defined by an ordered list of points $p_i$, specified by their indexes i. The 3D object O may be defined also by additional data, such as texture, color...

The bounding box B of the 3D object O is the rectangular parallelepiped of minimum dimension within which all points $p_i$ are included. In order to encrypt the 3D object O, the bounding box B is partitioned in sub-boxes $n_j$ (step S2), and the encryption is based on a scrambling of the indexes j.

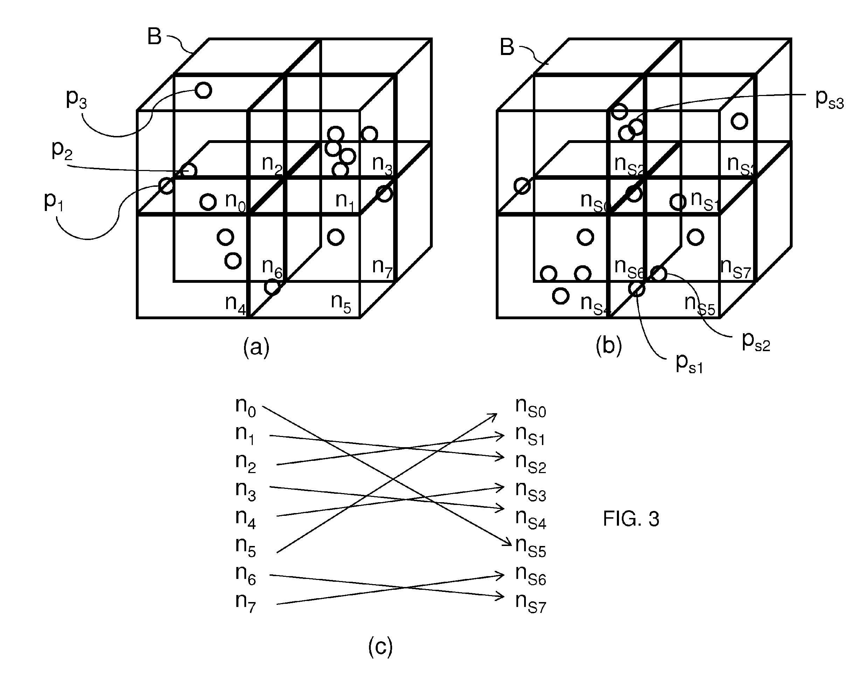

More precisely, in one embodiment illustrated on Figure 3, the bounding box B is partitioned by octree decomposition. Initially, the bounding box B is equally subdivided along its three principal axes in eight octants, which correspond to eight sub-nodes of the octree. All the points $p_i$ contained in one octant are associated with the corresponding sub-node in the tree structure at the first decomposition level. For the next decomposition levels, the same decomposition approach is applied: an octant of the decomposition level l is partitioned in eight octants of the decomposition level l+1, and the points $p_i$ contained in one octant of the decomposition level l+1 are associated with the corresponding sub-node in the tree structure. The decomposition process continues until the decomposition level is equal to a predefined threshold maximum_decomposition_level, or the end sub-nodes of the octree contain at maximum one point $p_i$.

At this stage, the octants of the last decomposition level define a partitioning of the bounding box B in sub-boxes. The sub-nodes of the octree and the corresponding sub-boxes are denoted $n_j$, with the index j ranging from 1 to $2^{3L}$ (or 0 to $2^{3L}-1$) where L is the last decomposition level. The indexes j are assigned for example by rastering first along the x axis, then the y axis, and then the z axis. The points $p_i$ are associated with the node $n_j$ corresponding to the sub-box within which they are located.

Then, the indexes j are scrambled in function of a pseudo random number generator controlled by a secret key k, such that each input index j is associated with one and only one output index $s_j$ (i.e. a bijection) different from j. Spatially, this correspond to permuting the sub-boxes $n_j$ to determine another set of sub-boxes $n_{s_j}$ by a bijection which depends on the secret key k (step S3):

$$n_{s_j} = f(n_j, \text{k}).$$

Then, point and faces for the encrypted 3D object $0_s$ are determined (step S4). For this, the points $p_i$ are displaced according to the displacement of the sub-box $n_j$ within which they are contained to the corresponding sub-box $n_{s_j}$. The displaced points are denoted $p_{s_i}$ and are associated to the points $p_i$ by a bijection. The indexes of the points $p_{s_i}$ may be equal to the indexes of the points $p_i$ : $s_i$ = i. In that case, the set of faces $F_s$ of the encrypted 3D object $0_s$ is equal to the set of faces F of the 3D object O : $F_s$ = F. Alternatively, the indexes of the points $p_{s_i}$ may be a permutation of the indexes of the corresponding points $p_i$. In that case, the indexes of the set of faces $F_s$ are adapted correspondingly. In both cases, a face of the set of faces F is specified by a list of indexes i and a corresponding face of the set of faces $F_s$ is specified by a list of corresponding second indexes $s_i$.

The displacement may be done in different ways. Options are:

- Type A: to perform a simple translation of the points $p_i$ according to the translation that the center of the sub-box $n_j$ undergoes between its original position and its scrambled position (the position of the corresponding sub-node $n_{s_j}$). For a point $p_i \in R^3$ associated to the original node $n_j$, the scrambled position of this point is noted $p_{s_i}$ and is given by:

$$\forall p_i \in n_j, \qquad p_{s_i} = p_i + \overrightarrow{(n_{s_j} - n_j)}$$

- Type B: to perform a simple translation of the points $p_i$ according to the translation that the center of the sub-box $n_j$ undergoes between its original position and its scrambled position (the position of the corresponding sub-node $n_{s_j}$), followed by a mirroring of the points with respect to their sub-box center so that normals would still point outwards of the bounding box. For each point $p_i$ associated to the original node $n_j$, the scrambled position of this point (associated now to the scrambled position of node $n_j$ noted now $n_{s_j}$) is noted $p_{s_i}$ and is given by:

$$\forall p_i \in n_j, \qquad p_{s_i} = p_i + \overrightarrow{\left(n_{s_j} - n_j\right)} - 2 \cdot \overrightarrow{\left(p_i - n_j\right)}$$

- Type C: to rotate the points $p_i$ in the same way as the center of the sub-box $n_j$ is rotated between its original position and its scrambled position. For each point $p_i$ associated to the original node $n_j$, the scrambled position of this point (associated now to the scrambled position of node $n_j$ noted now $n_{s_j}$) is noted $p_{s_i}$ and is given by:

$$\forall p_i \in n_j, \ p_{s_i} = A_s \, p_i,$$

where $A_s$ is the rotation matrix obtained when rotating the vector $\overrightarrow{On_J}$ towards $\overrightarrow{On_{sJ}}$, where O is the center of the object bounding box.

- Type D: to perform a simple translation of the points $p_i$ according to the translation that the center of the sub-box $n_j$ undergoes between its original position and its scrambled position, followed by a mirroring of the points with respect to one of the medial planes of the sub-box center: Types Dx, Dy and Dz if the plane is orthogonal to the x, y and z axis respectively (in world coordinates of the bounding box). For each point $p_i$ associated to the original node $n_j$, the scrambled position of this point (associated now to the scrambled position of node $n_j$ noted now $n_{s_j}$) is noted $p_{s_i}$ and is given by:

$$\forall p_i \in n_j, \qquad p_{s_i} = p_i + \overrightarrow{\left(n_{s_j} - n_j\right)} - 2 \cdot \overrightarrow{\left(p_i - p_i.D_x\right)}$$

where $p_i.D_x$ stands for the orthogonal projection of point $p_i$ on medial plane Dx.

For each sub-box $n_j$, one of the displacement type is selected. For example, the choice of the displacement option (Type A, B, C or D) depends on the secret key k.

The resulting set of points $p_{s_i}$ and set of faces $F_s$ define (at least partially) the encrypted 3D object $0_s$ (step S5).

The encrypted 3D object $0_s$ is contained in the same bounding box B and may therefore by displayed in a 3D world without interfering with other objects. Displaying the encrypted 3D object $0_s$ give an incentive to obtain the decrypted 3D object, for example by buying the usage right and obtaining the secret key k.

Moreover, the displacement of the points $p_i$ contained in the same sub-box $n_j$ is performed in the same manner. If the maximum level of decomposition is small, then large group of points $p_i$ are clustered and shuffled in the same way in the 3D space, which reduces triangle intersections and therefore rendering complexity of the encrypted 3D object $0_s$ and its deciphering complexity. If the maximum subdivision step is taken as such that maximum one point $p_i$ is contained in each sub-box $n_j$, then the security against surface reconstruction attack is high. More, in any case it does not rely on point indexes for its security. The selection of an intermediate threshold for octree maximum subdivision steps provide a good trade-off between security and complexity.

**Figure 2** shows an encrypting device 1 for encrypting a 3D object O. The encrypting device 1 executes the method of Figure 1 and comprises an octree decomposition module 2, a pseudo random number generator 3 and an octree scrambling module 4.

The octree decomposition module 2 partitions the bounding box B of the 3D object O into sub-boxes $n_j$. The partitioning is based on octree decomposition as explained with respect to step S2 of Figure 1.

The pseudo random number generator 3 is controlled by the secret key k and determines pseudo random number.

The octree scrambling module 4 scrambles the nodes of the octree in function of the output of the pseudo random number generator 3, as explained with respect to step S3 of Figure 1, and displaces the points $p_i$ based on the scrambling of the nodes as explained with respect to step S4 of Figure 1.

The output of the octree scrambling module 4 is the encrypted 3D object $0_s$.

**Figure 3** illustrates the method of figure 1 for a simple example where maximum_decomposition_level = 1. Part (a) shows the bounding box B of a 3D object partitioned in an octree of eight nodes no to $n_7$, and points $p_i$. Part (b) shows the bounding box B of the encrypted 3D object $0_s$ partitioned in an octree of eight nodes $n_{s0}$ to $n_{s7}$, and points $p_{si}$. In this example, the points $p_i$ are displaced by a simple translation according to the octree node scrambling, i.e. displacement of type A. The scrambling of the nodes used in this example is shown on part (c)

Accordingly, points $p_1$ and $p_2$ of the original object contained in node no are translated to points $p_{s1}$ and $p_{s2}$ of the encrypted object, contained in node $n_{s5}$. Similarly, point $p_3$ of the original object contained in node $n_2$ is translated to point $p_{s3}$ of the encrypted object, contained in node $n_{s1}$. The object appearance is significantly changed while still contained into its bounding box B. A face of the original 3D object O, defined by points $p_1$, $p_2$ and $p_3$, correspond to a face defined by points $p_{s1}$, $p_{s2}$ and $p_{s3}$ in the encrypted 3D object $0_s$. Since $p_1$ and $p_2$ are translated together according to the displacement from node no to $n_{s5}$, intersections with other faces are limited and rendering complexity of the encrypted 3D object $0_s$ is limited.

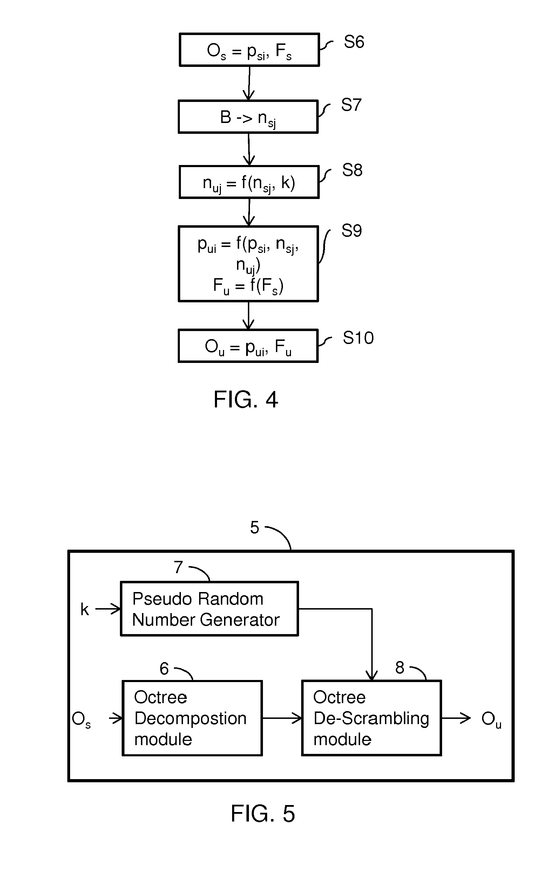

**Figure 4** is a flowchart of a method for decrypting an encrypted 3D object $0_s$ into an decrypted 3D object $0_u$.

The encrypted 3D object $0_s$ has been obtained by encrypting a 3D object O with a secret key k, according to the method of figure 1, and is defined at least by a set of points $p_{si}$ and a set of faces F (step S6). The encrypted 3D object $0_s$ may be defined also by additional data, such as texture, color...

The bounding box B of the encrypted 3D object $0_s$ is the rectangular parallelepiped of minimum dimension within which all points $p_{si}$ are included. It is the same as the bounding box B of the 3D object O. In order to decrypt the encrypted 3D object $0_s$, the bounding box B is partitioned in sub-boxes $n_{sj}$ (step S7), and the decryption is based on a descrambling of the indexes $s_j$.

More precisely, the bounding box B is partitioned by octree decomposition in the same manner as in step S2 of figure 1. At the end, the octants of the last decomposition level define a partitioning of the bounding box B in sub-boxes. The sub-nodes of the octree and the corresponding sub-boxes are denoted $n_{sj}$. The points $p_{si}$ are associated with the node $n_{sj}$ corresponding to the sub-box within which they are located.

It should be noted that, whether partitioning the bounding box B stops at the threshold maximum_decomposition_level or when the sub-nodes are associated with at maximum one point $p_{si}$, the partitioning will be the same as the one of step S2. Consequently, by descrambling the indexes $s_j$ in function of the same pseudo random number generator as for encrypting, controlled by the secret key k, indexes $u_j$ are obtained which correspond to the indexes ¡ of the decomposition of the original 3D object O. Spatially, this correspond to permuting the sub-boxes $n_{sj}$ to determine another set of sub-boxes $n_{uj}$, by a bijection which depends on the secret key k (step S8):

$$n_{u_j} = f(n_{s_j}, k).$$

Then, point and faces for the decrypted 3D object $0_u$ are determined (step S9). For this, the points $p_{si}$ are displaced according to the displacement of the sub-box $n_{sj}$ within which they are contained to the corresponding sub-box $n_{uj}$. The displaced points are denoted $p_{ui}$ and are associated to the points $p_{si}$ by a bijection. The indexes of the points $p_{ui}$ may be equal to the indexes of the points $p_{si}$ : $u_i = s_i$. In that case, the set of faces $F_u$ of the decrypted 3D object $0_u$

is equal to the set of faces $F_s$ of the encrypted 3D object $O_s$ : $F_u = F_s$. Alternatively, the indexes of the points $p_{u_i}$ may be a permutation of the indexes of the corresponding points $p_{s_i}$. In that case, the indexes of the set of faces $F_u$ are adapted correspondingly. In both cases, a face of the set of faces $F_s$ is specified by a list of indexes $s_i$ and a corresponding face of the set of faces $F_u$ is specified by a list of corresponding second indexes $u_i$.

The displacement types correspond to the types used for encryption:

- Type A: Noting $n_{u_j}$ the unscrambled position of scrambled node $n_{s_j}$ which is the same as the original node $n_j$ if the correct secret key k is used for descrambling, unscrambling positions of the scrambled points $p_{s_i} \in n_{s_j}$ are given by:

$$\forall p_{s_i} \in n_{s_j}, \qquad p_{u_i} = p_{s_i} + \overrightarrow{(n_{u_j} - n_{s_j})}$$

- Type B: unscrambling positions of the scrambled points $p_{s_i} \in n_{s_j}$ are given by:

$$\forall p_{s_i} \in n_{s_j}, \qquad p_{u_i} = p_{s_i} + \overrightarrow{(n_{u_j} - n_{s_j})} - 2 \cdot \overrightarrow{(p_{s_i} - n_{s_j})}$$

- Type C: unscrambling positions of the scrambled points $p_{s_i} \in n_{s_j}$ are given by:

$$\forall p_{s_i} \in n_{s_j}, \qquad p_{u_i} = A_u \, p_{s_i}$$

where $A_u$ is the rotation matrix obtained when rotating the vector $\overrightarrow{On_{s_J}}$ towards $\overrightarrow{On_{u_J}}$, where O is the center of the (scrambled) object bounding box.

- Type D: unscrambling positions of the scrambled points $p_{s_i} \in n_{s_j}$ are given by:

$$\forall p_{s_i} \in n_{s_j}, \qquad p_{u_i} = p_{s_i} + \overrightarrow{(n_{u_j} - n_{s_j})} - 2 \cdot \overrightarrow{(p_{s_i} - p_{s_i}.D_{s_x})}$$

where $p_{s_i}.D_{s_x}$ stands for the orthogonal projection of point $p_{s_i}$ on the scrambled medial plane $Ds_x$.

For each sub-box $n_{s_j}$, one of the displacement type is selected. For example, the choice of the displacement option (Type A, B, C or D) depends on the secret key k.

The resulting set of points $p_{ui}$ set of faces $F_u$ define (at least partially) the decrypted 3D object $O_u$ (step S10), which is equal to the original 3D object O if the correct secret key k was used.

Thus, decrypting the encrypted 3D object $O_s$ is based on octree decomposition and descrambling, and has a low complexity for low decomposition level as explained before.

**Figure 5** shows a decrypting device 5 for decrypting a 3D object $O_s$. The decrypting device 5 executes the method of Figure 4 and comprises an octree decomposition module 6, a pseudo random number generator 7 and an octree descrambling module 8. The functioning of the octree decomposition module 6, the pseudo random number generator 7 and the octree descrambling module 8 correspond to that of the corresponding module of Figure 2.

The output of the octree descrambling module 8 is the decrypted 3D object $O_u$.

The embodiment described above uses octree decomposition. This has the advantage that, provided that the encrypting device 1 and the decrypting device 5 use the same maximum_decomposition_level threshold, the decomposition of the bounding box of the encrypted 3D object $O_s$ by the decrypting device 5 corresponds to the decomposition of the bounding box of the original 3D object O by the encrypting device 1. For this, the decrypting device 5 does not need to obtain data related to the decomposition performed by the encrypting device 1. In other words, the decomposition is implicit. Accordingly, descrambling and displacing the points based on the same secret key k allows determining the decrypted 3D object $OO_u$ equal to the original 3D object O, without the need of decomposition data.

However, in other embodiments, other points clustering techniques may be used for partitioning the bounding box of the original 3D object O into sub-boxes. In some case, the decrypting device 5 may need to obtain decomposition data specifying the decomposition of the bounding box of the original 3D object O by the encrypting device 1, for example parameters, for decomposing the bounding box of the encrypted 3D object $O_s$ in the corresponding manner. This can be done by so-called "side-information" that is received together with the secret key.

**Figure 6** is a structural view of a device, which may be the encrypting device 1 and/or the decrypting device 5. The device of Figure 6 comprises a processor 10 and a memory 11. The memory comprises a computer program P which include instructions executable by the processor 10. The functional modules shown on figure 2 or 5 may correspond to the execution of the computer program P by the device of Figure 6.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for encrypting a 3D object (O) defined at least by a set of first points ($p_i$) and a first set of faces (F), contained in a bounding box (B), the method being executed by an encryption device and comprising:

  - determining (S4) a set of second points ($p_{si}$) by bijection of the set of first points ($p_i$), and a second set of faces ($F_s$),
  - determining (S5) an encrypted 3D object ($0_s$) defined at least by the set of second points ($p_{si}$) and the second set of faces ($F_s$),

  wherein the first points ($p_i$) are associated with respective first indexes (i), the second points ($p_{si}$) are associated with respective second indexes ($s_i$), a face of the first set of faces (F) is specified by a list of first indexes (i) and a corresponding face of the second set of faces ($F_s$) is specified by a list of corresponding second indexes ($s_i$), wherein the encrypted 3D object ($0_s$) is contained in said bounding box (B), the method further comprising:

  - partitioning the bounding box (B) into a set of first sub-boxes ($n_j$),
  - determining a set of second sub-boxes ($n_{sj}$) by bijection of the set of first sub-boxes ($n_j$), in function of a secret key (k),
  wherein the position of a second point ($p_{si}$) is determined in function the position of the corresponding first point ($p_i$), the position of the first sub-box ($n_j$) containing the corresponding first point, and the position of the second sub-box ($n_{sj}$) corresponding with said first sub-box ($n_j$).

2. Method according to claim 1, wherein partitioning the bounding box into a set of first sub-boxes ($n_j$) comprises an octree decomposition of the bounding box.

3. Method according to claim 2, wherein the octree decomposition is iterated until a predefined maximum decomposition level is reached or until the sub-boxes comprises at maximum one first point ($p_i$).

4. Method according to one of claims 1 to 3, wherein the position of a second point ($p_{si}$) is determined by one of the following displacement types:

- a translation of the corresponding first point ($p_i$) according to the translation between a center of the first sub-box ($n_j$) containing the corresponding first point and a center of the second sub-box ($n_{sj}$) corresponding with said first sub-box ($n_j$),

- a translation of the corresponding first point ($p_i$) according to the translation between the center of the first sub-box ($n_j$) containing the corresponding first point and the center of the second sub-box ($n_{sj}$) corresponding with said first sub-box ($n_j$), followed by a mirroring with respect to the center of said second sub-box ($n_{sj}$),

- a rotation of the corresponding first point ($p_i$) according to the rotation between the center of the first sub-box ($n_j$) containing the corresponding first point and the center of the second sub-box ($n_{sj}$) corresponding with said first sub-box ($n_j$),

- a translation of the corresponding first point ($p_i$) according to the translation between the center of the first sub-box ($n_j$) containing the corresponding first point and the center of the second sub-box ($n_{sj}$) corresponding with the said first sub-box ($n_j$), followed by a mirroring of the points with respect to a medial plane of said second sub-box center.

5. Method according to claim 4, wherein the displacement type for determining a second point depends on the secret key (k).

6. Computer program comprising instructions executable by a processor for performing the method according to one of claims 1 to 5 when said instructions are executed by a computer.

7. Device for encrypting a 3D object defined at least by a set of first points ($p_i$) and a first set of faces (F), contained in a bounding box, comprising:

- means for determining a set of second points ($p_{si}$) by bijection of the set of first points ($p_i$), and a second set of faces ($F_s$),
- means for determining an encrypted 3D object defined at least by the set of second points and the second set of faces ($F_s$),

wherein the first points ($p_i$) are associated with respective first indexes (i), the second points ($p_{si}$) are associated with respective second indexes ($s_i$), a face of the first set of faces (F) is specified by a list of first indexes (i) and a corresponding face of the second set of faces ($F_s$) is specified by a list of corresponding second indexes ($s_i$), wherein the encrypted 3D object is contained in said bounding box,
the device further comprising:

- means for partitioning the bounding box into a set of first sub-boxes ($n_j$),
- means for determining a set of second sub-boxes ($n_{sj}$) by bijection of the set of first sub-boxes ($n_j$), in function of a secret key (k),
wherein the position of a second point ($p_{si}$) is determined in function the position of the corresponding first point ($p_i$), the position of the first sub-box ($n_j$) containing the corresponding first point ($p_i$), and the position of the second sub-box ($n_{sj}$) corresponding with said first sub-box ($n_j$).

8. Method for decrypting an encrypted 3D object defined at least by a set of second points ($p_{si}$) and a second set of faces ($F_s$), contained in a bounding box, the method being executed by an decryption device and comprising:

- determining a set of third points ($p_{ui}$) by bijection of the set of second points ($p_{si}$), and a third set of faces ($F_u$),
- determining a decrypted 3D object defined at least by the set of third points and the third set of faces ($F_u$),

wherein the second points ($p_{si}$) are associated with respective second indexes ($s_i$), the third points ($p_{ui}$) are associated with respective third indexes ($u_i$), a face of the second set of faces ($F_s$) is specified by a list of second indexes ($s_i$) and a corresponding face of the third set of faces ($F_u$) is specified by a list of corresponding third indexes ($u_i$), wherein the decrypted 3D object is contained in said bounding box,
the method further comprising:

- partitioning the bounding box into a set of second sub-boxes ($n_{sj}$),
- determining a set of third sub-boxes ($n_{uj}$) by bijection of the set of second sub-boxes ($n_{sj}$), in function of a secret key (k),

wherein the position of a third point ($p_{ui}$) is determined in function the position of the corresponding second point

($p_{si}$), the position of the second sub-box ($n_{sj}$) containing the corresponding second point, and the position of the third sub-box ($n_{uj}$) corresponding with said first sub-box ($n_{sj}$).

9. Method according to claim 8, wherein partitioning the bounding box into a set of second sub-boxes comprises an octree decomposition of the bounding box.

10. Method according to claim 9, wherein the octree decomposition is iterated until a predefined maximum decomposition level is reached or until the sub-boxes comprises at maximum one second point.

11. Method according to one of claims 8 to 10, wherein the position of a third point ($p_{ui}$) is determined by one of the following displacement types:

- a translation of the corresponding second point ($p_{si}$) according to the translation between a center of the second sub-box ($n_{sj}$) containing the corresponding second point and a center of the third sub-box ($n_{uj}$) corresponding with said second sub-box ($n_{sj}$),
- a translation of the corresponding second point ($p_{si}$) according to the translation between the center of the second sub-box ($n_{sj}$) containing the corresponding second point and the center of the third sub-box ($n_{uj}$) corresponding with said second sub-box ($n_{sj}$), followed by a mirroring with respect to the center of said third sub-box ($n_{uj}$),
- a rotation of the corresponding second point ($p_{si}$) according to the rotation between the center of the second sub-box ($n_{sj}$) containing the corresponding second point and the center of the third sub-box ($n_{uj}$) corresponding with said second sub-box ($n_{sj}$),
- a translation of the corresponding second point ($p_{si}$) according to the translation between the center of the second sub-box ($n_{sj}$) containing the corresponding second point and the center of the third sub-box ($n_{uj}$) corresponding with the said second sub-box ($n_{sj}$), followed by a mirroring of the points with respect to a medial plane of said third sub-box center.

12. Method according to claim 11, wherein the displacement type for determining a second point depends on the secret key (k).

13. Computer program comprising instructions executable by a processor for performing the method according to one of claims 8 to 12 when said instructions are executed by a computer.

14. Device for decrypting an encrypted 3D object defined at least by a set of second points ($p_{si}$) and a second set of faces ($F_s$), contained in a bounding box, comprising:

- means for determining a set of third points ($p_{ui}$) by bijection of the set of second points ($p_{si}$), and a third set of faces ($F_u$),
- means for determining a decrypted 3D object defined at least by the set of third points and the third set of faces ($F_u$),

wherein the second points ($p_{si}$) are associated with respective second indexes ($s_i$), the third points ($p_{ui}$) are associated with respective third indexes ($u_i$), a face of the second set of faces ($F_s$) is specified by a list of second indexes ($s_i$) and a corresponding face of the third set of faces ($F_u$) is specified by a list of corresponding third indexes ($u_i$), wherein the decrypted 3D object is contained in said bounding box, the device further comprising:

- means for partitioning the bounding box into a set of second sub-boxes ($n_{sj}$),
- means for determining a set of third sub-boxes ($n_{uj}$) by bijection of the set of second sub-boxes ($n_{sj}$), in function of a secret key (k),

wherein the position of a third point ($p_{ui}$) is determined in function the position of the corresponding second point ($p_{si}$), the position of the second sub-box ($n_{sj}$) containing the corresponding second point, and the position of the third sub-box ($n_{uj}$) corresponding with said first sub-box ($n_{sj}$).

**Amended claims in accordance with Rule 137(2) EPC.**

1. Method for encrypting a 3D object ($\bigcirc$) defined at least by a set of first points ($p_i$) and a first set of faces (F), contained in a bounding box (B), the method being executed by an encryption device and comprising:

   - determining (S4) a set of second points ($p_{si}$) by bijection of the set of first points ($p_i$), and a second set of faces ($F_s$),
   - determining (S5) an encrypted 3D object ($O_s$) defined at least by the set of second points ($p_{si}$) and the second set of faces ($F_s$),
   wherein the first points ($p_i$) are associated with respective first indexes (i), the second points ($p_{si}$) are associated with respective second indexes ($s_i$), a face of the first set of faces (F) is specified by a list of first indexes (i) and a corresponding face of the second set of faces ($F_s$) is specified by a list of corresponding second indexes ($s_i$), wherein the encrypted 3D object ($O_s$) is contained in said bounding box (B), the method being **characterized in that** said bijection of the set of first points ($p_i$) is determined by:
   - partitioning the bounding box (B) into a set of first sub-boxes ($n_j$),
   - determining a set of second sub-boxes ($n_{sj}$) by bijection of the set of first sub-boxes ($n_j$), in function of a secret key (k),
   wherein the position of a second point ($p_{si}$) is determined in function the position of the corresponding first point ($p_i$), the position of the first sub-box ($n_j$) containing the corresponding first point, and the position of the second sub-box ($n_{sj}$) corresponding with said first sub-box ($n_j$).

2. Method according to claim 1, wherein partitioning the bounding box into a set of first sub-boxes ($n_j$) comprises an octree decomposition of the bounding box.

3. Method according to claim 2, wherein the octree decomposition is iterated until a predefined maximum decomposition level is reached or until the sub-boxes comprises at maximum one first point ($p_i$).

4. Method according to one of claims 1 to 3, wherein the position of a second point ($p_{si}$) is determined by one of the following displacement types:

   - a translation of the corresponding first point ($p_i$) according to the translation between a center of the first sub-box ($n_j$) containing the corresponding first point and a center of the second sub-box ($n_{sj}$) corresponding with said first sub-box ($n_j$),
   - a translation of the corresponding first point ($p_i$) according to the translation between the center of the first sub-box ($n_j$) containing the corresponding first point and the center of the second sub-box ($n_{sj}$) corresponding with said first sub-box ($n_j$), followed by a mirroring with respect to the center of said second sub-box ($n_{sj}$),
   - a rotation of the corresponding first point ($p_i$) according to the rotation between the center of the first sub-box ($n_j$) containing the corresponding first point and the center of the second sub-box ($n_{sj}$) corresponding with said first sub-box ($n_j$),
   - a translation of the corresponding first point ($p_i$) according to the translation between the center of the first sub-box ($n_j$) containing the corresponding first point and the center of the second sub-box ($n_{sj}$) corresponding with the said first sub-box ($n_j$), followed by a mirroring of the points with respect to a medial plane of said second sub-box center.

5. Method according to claim 4, wherein the displacement type for determining a second point depends on the secret key (k).

6. Computer program comprising instructions executable by a processor for performing the method according to one of claims 1 to 5 when said instructions are executed by a computer.

7. Device for encrypting a 3D object defined at least by a set of first points ($p_i$) and a first set of faces (F), contained in a bounding box, comprising:

   - means for determining a set of second points ($p_{si}$) by bijection of the set of first points ($p_i$), and a second set of faces ($F_s$),
   - means for determining an encrypted 3D object defined at least by the set of second points and the second set of faces ($F_s$),
   wherein the first points ($p_i$) are associated with respective first indexes (i), the second points ($p_{si}$) are associated with respective second indexes ($s_i$), a face of the first set of faces (F) is specified by a list of first indexes (i) and a corresponding face of the second set of faces ($F_s$) is specified by a list of corresponding second indexes ($s_i$), wherein the encrypted 3D object is contained in said bounding box,

**characterized in that** said bijection of the set of first points ($p_i$) is determined by:

- means for partitioning the bounding box into a set of first sub-boxes ($n_j$), and
- means for determining a set of second sub-boxes ($n_{sj}$) by bijection of the set of first sub-boxes ($n_j$), in function of a secret key (k),

wherein the position of a second point ($p_{si}$) is determined in function the position of the corresponding first point ($p_i$), the position of the first sub-box ($n_j$) containing the corresponding first point ($p_i$), and the position of the second sub-box ($n_{sj}$) corresponding with said first sub-box ($n_j$).

8. Method for decrypting an encrypted 3D object defined at least by a set of second points ($p_{si}$) and a second set of faces ($F_s$), contained in a bounding box, the method being executed by an decryption device and comprising:

- determining a set of third points ($p_{ui}$) by bijection of the set of second points ($p_{si}$), and a third set of faces ($F_u$),
- determining a decrypted 3D object defined at least by the set of third points and the third set of faces ($F_u$),

wherein the second points ($p_{si}$) are associated with respective second indexes ($s_i$), the third points ($p_{ui}$) are associated with respective third indexes ($u_i$), a face of the second set of faces ($F_s$) is specified by a list of second indexes ($s_i$) and a corresponding face of the third set of faces ($F_u$) is specified by a list of corresponding third indexes ($u_i$),

wherein the decrypted 3D object is contained in said bounding box,

the method being **characterized in that** said bijection of the set of second points ($p_{si}$) is determined by:

- partitioning the bounding box into a set of second sub-boxes ($n_{sj}$),
- determining a set of third sub-boxes ($n_{uj}$) by bijection of the set of second sub-boxes ($n_{sj}$), in function of a secret key (k),

wherein the position of a third point ($p_{ui}$) is determined in function the position of the corresponding second point ($p_{si}$), the position of the second sub-box ($n_{sj}$) containing the corresponding second point, and the position of the third sub-box ($n_{uj}$) corresponding with said first sub-box ($n_{sj}$).

9. Method according to claim 8, wherein partitioning the bounding box into a set of second sub-boxes comprises an octree decomposition of the bounding box.

10. Method according to claim 9, wherein the octree decomposition is iterated until a predefined maximum decomposition level is reached or until the sub-boxes comprises at maximum one second point.

11. Method according to one of claims 8 to 10, wherein the position of a third point ($p_{ui}$) is determined by one of the following displacement types:

- a translation of the corresponding second point ($p_{si}$) according to the translation between a center of the second sub-box ($n_{sj}$) containing the corresponding second point and a center of the third sub-box ($n_{uj}$) corresponding with said second sub-box ($n_{sj}$),
- a translation of the corresponding second point ($p_{si}$) according to the translation between the center of the second sub-box ($n_{sj}$) containing the corresponding second point and the center of the third sub-box ($n_{uj}$) corresponding with said second sub-box ($n_{sj}$), followed by a mirroring with respect to the center of said third sub-box ($n_{uj}$),
- a rotation of the corresponding second point ($p_{si}$) according to the rotation between the center of the second sub-box ($n_{sj}$) containing the corresponding second point and the center of the third sub-box ($n_{uj}$) corresponding with said second sub-box ($n_{sj}$),
- a translation of the corresponding second point ($p_{si}$) according to the translation between the center of the second sub-box ($n_{sj}$) containing the corresponding second point and the center of the third sub-box ($n_{uj}$) corresponding with the said second sub-box ($n_{sj}$), followed by a mirroring of the points with respect to a medial plane of said third sub-box center.

12. Method according to claim 11, wherein the displacement type for determining a second point depends on the secret key (k).

13. Computer program comprising instructions executable by a processor for performing the method according to one of claims 8 to 12 when said instructions are executed by a computer.

**14.** Device for decrypting an encrypted 3D object defined at least by a set of second points ($p_{si}$) and a second set of faces ($F_s$), contained in a bounding box, comprising:

- means for determining a set of third points ($p_{ui}$) by bijection of the set of second points ($p_{si}$),and a third set of faces ($F_u$),
- means for determining a decrypted 3D object defined at least by the set of third points and the third set of faces ($F_u$),
wherein the second points ($p_{si}$) are associated with respective second indexes ($s_i$), the third points ($p_{ui}$) are associated with respective third indexes ($u_i$), a face of the second set of faces ($F_s$) is specified by a list of second indexes ($s_i$) and a corresponding face of the third set of faces ($F_u$) is specified by a list of corresponding third indexes ($u_i$),
wherein the decrypted 3D object is contained in said bounding box,
**characterized in that** said bijection of the set of second points ($p_{si}$) is determined by:
- means for partitioning the bounding box into a set of second sub-boxes ($n_{sj}$), and
- means for determining a set of third sub-boxes ($n_{uj}$) by bijection of the set of second sub-boxes ($n_{sj}$), in function of a secret key (k),
wherein the position of a third point ($p_{ui}$) is determined in function the position of the corresponding second point ($p_{si}$),the position of the second sub-box ($n_{sj}$) containing the corresponding second point, and the position of the third sub-box ($n_{uj}$) corresponding with said first sub-box ($n_{sj}$).

$$O = p_i, F \qquad \text{S1}$$

$$B \rightarrow n_j \qquad \text{S2}$$

$$n_{sj} = f(n_j, k) \qquad \text{S3}$$

$$p_{si} = f(p_i, n_j, n_{sj})$$
$$F_s = f(F) \qquad \text{S4}$$

$$O_s = p_{si}, F_s \qquad \text{S5}$$

FIG. 1

1

| k → | Pseudo Random Number Generator |
| --- | --- |

3

O → | Octree Decompostion module | 2 → | Octree Scrambling module | 4 → $O_s$

FIG. 2

1, 5

| 10 | P |

11

FIG. 6

$$O_s = p_{si}, F_s \quad \text{S6}$$

$$B \rightarrow n_{sj} \quad \text{S7}$$

$$n_{uj} = f(n_{sj}, k) \quad \text{S8}$$

$$p_{ui} = f(p_{si}, n_{sj}, n_{uj})$$
$$F_u = f(F_s) \quad \text{S9}$$

$$O_u = p_{ui}, F_u \quad \text{S10}$$

FIG. 4

5

7 — Pseudo Random Number Generator

$k \rightarrow$

6 — Octree Decompostion module

$O_s \rightarrow$

8 — Octree De-Scrambling module

$\rightarrow O_u$

FIG. 5

(a)

(b)

FIG. 3

(c)

EP 2 905 923 A1

Europäisches
Patentamt

European
Patent Office

Office européen
des brevets

## EUROPEAN SEARCH REPORT

**Application Number**

EP 14 30 5177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI S ET AL: "A general quantitative cryptanalysis of permutation-only multimedia ciphers against plaintext attacks", SIGNAL PROCESSING. IMAGE COMMUNICATION, ELSEVIER SCIENCE PUBLISHERS, AMSTERDAM, NL, vol. 23, no. 3, 1 March 2008 (2008-03-01), pages 212-223, XP022612134, ISSN: 0923-5965, DOI: 10.1016/J.IMAGE.2008.01.003 [retrieved on 2008-02-14] * section 2 * | 1-14 | INV. H04L9/00 |
| X | CHANG H K-C ET AL: "A linear quadtree compression scheme for image encryption", SIGNAL PROCESSING. IMAGE COMMUNICATION, ELSEVIER SCIENCE PUBLISHERS, AMSTERDAM, NL, vol. 10, no. 4, 1 September 1997 (1997-09-01), pages 279-290, XP004091245, ISSN: 0923-5965, DOI: 10.1016/S0923-5965(96)00025-2 * section 2; figures 1,3 * | 1-14 | |
| X | ZHONG MING ET AL: "Spatial Domain Image Selective Encryption Algorithm Based on Quadtree Encoding", JISUANJI GONGCHENG = COMPUTER ENGINEERING, SHANGHAI JISUANJI XUEHUI, CH, vol. 34, no. 18, 1 September 2008 (2008-09-01), pages 174-175,178, XP009178834, ISSN: 1000-3428 * sections 2 and 3; figures 1,2,3 * | 1-14 | TECHNICAL FIELDS SEARCHED (IPC) G06T H04L |

The present search report has been drawn up for all claims

| Place of search | Date of completion of the search | Examiner |
|---|---|---|
| Munich | 7 July 2014 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)